# EUROPÄISCHE PATENTSCHRIFT

(11) **EP 4 669 600 B1**
(45) Veröffentlichungstag und Bekanntmachung des Hinweises auf die Patenterteilung: **03.06.2026**
(21) Anmeldenummer: 24730976.8
(22) Anmeldetag: 03.06.2024
(51) Int. Cl.: B65G 1/04, B65G 1/06, B65G 1/08, B65G 65/00

(54) **LAGERLIFT MIT AUTOMATISCHER BELADUNG UND ENTLADUNG DURCH EIN FAHRZEUG**
STORAGE LIFT WITH AUTOMATED LOADING AND UNLOADING BY A VEHICLE
ASCENSEUR DE STOCKAGE AVEC CHARGEMENT ET DE DÉCHARGEMENT AUTOMATIQUES PAR UN VÉHICULE

(30) Priorität: 16.06.2023 DE 102023115855
(43) Veröffentlichungstag der Anmeldung: 31.12.2025
(73) Patentinhaber: SSI Schäfer s.r.o., 75301 Hranice (CZ)
(72) Erfinder: LÜTKEBOMK, Felix, 44137 Dortmund (DE); RAPP, Karl, 73084 Salach (DE); KONYA, Gyula Istvan, 85777 Fahrenzhausen (DE)
(74) Vertreter: Witte, Weller & Partner Patentanwälte mbB
(86) Internationale Anmeldenummer: PCT/EP2024/065194
(87) Internationale Veröffentlichungsnummer: WO 2024/256203

(56) Entgegenhaltungen:
- EP-A1- 1 138 617
- WO-A1-2017/036778
- CN-A- 113 636 249
- DE-A1- 3 714 638
- DE-U1- 202018 101 313

## Beschreibung

Die vorliegende Offenbarung betrifft generell das Gebiet der Intralogistik und insbesondere ein Lager- und Kommissioniersystem mit einem Lagerlift und einem Transportfahrzeug zur automatisierten Ein- und Auslagerung über eine Bedienöffnung des Lagerlifts von in Lagerlift-Tablaren gelagerten Lagerbehältern.

Lagerlifte sind seit langem bekannt, siehe z.B. die SSI-Schäfer-Broschüre "LAGERLIFTE - Whitepaper 2/2019". Wie dort definiert und im Nachfolgenden verwendet, sind "Lagerlifte" automatisierte Lager- und Kommissioniersysteme, wo (lange überdimensionierte) Ladungsträger (Lagerlift-Tablare) nach dem Ware-zum-Manipulator-Prinzip (Manipulator = Mensch oder Roboter) bewegt werden, um Lagergüter (Standardbehälter) gemäß einem Kommissionierauftrag aus automatisch bereitgestellten (systeminternen) Ladungsträgern (Lagerbehälter bzw. andere Quellen) zu entnehmen und an einen oder mehrere (systemexterne) Ladehilfsmittel (Ziel = z.B. Auftragsbehälter) abzugeben. Die Ladungsträger verlassen den Lagerlift üblicherweise nicht und verbleiben innerhalb des Systems.

Lagerlifte sind in der Intralogistik auch unter anderen Bezeichnungen bekannt. So werden häufig Begriffe wie "Vertikallift", "Tablarlager", "Lagerturm", "Liftregal" oder "Turmlager" verwendet. In Abgrenzung zu Paternostern oder Umlaufregalen (siehe z.B. DE 37 14 638 A1), die häufig und irrtümlich mit Lagerliften gleichgesetzt werden, handelt es sich bei einem Lagerlift (siehe z.B. DE 10 2007 029 308 A1) nicht um ein umlaufendes (Lagerplatz-) System. Der Grund für die Verwechslung liegt häufig darin, dass sowohl der Lagerlift einerseits als auch das Umlaufregal andererseits dynamische Regalanlagen sind, die nach dem Ware-zur-Person-Prinzip arbeiten. Beim Paternoster allerdings werden alle Lagerplätze, d.h. nicht nur einer, gleichzeitig bewegt, um den gewünschten Lagerplatz durch einen Umlauf an eine Bedienöffnung (Kommissionierstation) zu bringen. Das im Lagerplatz befindliche Lagergut wird beim Paternoster zusammen mit dem gesamten Lager- bzw. Regalgestell bewegt. Ein Paternoster bewegt das Lagergut und den entsprechenden Ladungsträger, der das Lagergut trägt, auf der einen Seite vertikal in die Tiefe und gleichzeitig andere Ladungsträger auf der anderen parallelgeführten Seite vertikal in die Höhe. Beim Lagerlift wird das Regal nicht bewegt. Beim Lagerlift werden üblicherweise ein oder zwei Lagerplätze gleichzeitig in einem vom Regalgestell getrennten Schacht vertikal bewegt.

Ein Lagerlift lässt sich mit einem überdimensionalen Schubladenschrank mit üblicherweise zwei Regal- bzw. Ladungsträgersäulen (Tablarsäulen) - einer vorderen und einer hinteren - vergleichen. Zwischen den beiden Säulen ist ein Schacht definiert, in dem ein (interner) Vertikalförderer (Lift) vorgesehen ist, der die einzelnen Lagerlift-Tablare mit seinem Ladehilfsmittel horizontal herauszieht und der vertikal zur jeweiligen (Höhen-) Position der Bedienöffnung fährt, um die Ladungsträger horizontal an die Bedienöffnung abzugeben. Die einzelnen Ladungsträger sind also völlig unabhängig voneinander und können einzeln bewegt werden.

Lagerlifte, d.h. die darin befindlichen Lagerlift-Tablare, müssen mit Lagergut gefüllt werden. Hierzu gibt es verschiedene Ansätze. Die Befüllung erfolgt i.) entweder indem leere Tablare in der Bedienöffnung bereitgestellt werden und dort manuell, oder mittels Robotern, mit dem Lagergut (wieder) befüllt werden, wobei die Tablare die ganze Zeit im Lagerlift verbleiben, oder ii.) indem die Tablare aus dem Lagerlift ausgelagert, extern befüllt und anschließend wieder eingelagert werden.

Im ersten Fall findet die Beladung der Tablare im Inneren der Bedienöffnung statt. Die Bedienöffnung ist räumlich schmal, d.h. eng. Es gibt nicht viel Platz, um die Lagergüter innerhalb der Bedienöffnung zu bewegen. Für Menschen ist die Ein- und Auslagerung der Lagergüter körperlich anstrengend. Wenn die Ein- und Auslagerung automatisiert ist, müssen Roboter mit vielen Freiheitsgraden verwendet werden, um sicher und zuverlässig im eingeengten Raum der Bedienöffnung manövrieren zu können. Derartige Roboter sind teuer und erfordern einen hohen Steuerungs- und Überwachungsaufwand.

Der zweite Fall ist in der DE 10 2007 029 308 A1 beschrieben, wo selbstfahrende Transportfahrzeuge von außen an (oder in) die Lagerlift-Bedienöffnung fahren, um Tablare mit dem Lagerlift auszutauschen, so dass die Tablare den Lagerlift phasenweise verlassen. In diesem Fall ist der Lagerlift selbst mit einem Aktuator versehen, der den Austausch der Tablare durch Ziehen oder Schieben aktiv bewirkt. Das Transportfahrzeug-LAM ist passiv, d.h. mit keinem Aktuator versehen. Der Austausch des gesamten Tablars ist aufwändig. Der Lagerlift muss mit einem entsprechenden (zusätzlichen) Mechanismus versehen sein, um die Tablare zu schieben und zu ziehen. Ferner wird ein Koppelmechanismus benötigt, um die Tablare vom Lagerlift zu trennen bzw. sie mit dem Lagerlift wieder zu verbinden. Es wird eine hohe Positioniergenauigkeit zwischen dem Transportfahrzeug und der Bedienöffnung benötigt, weil die Tablare sehr groß (lang) sind. Damit erhöht sich der Steuerungs- und Überwachungsaufwand. Die Tablare sind schwer, so dass das Transportfahrzeug entsprechend stabil ausgelegt sein muss, was die Kosten und den Aufwand zusätzlich erhöht.

Die EP 2 955 121 A2 betrifft ein Transportmittel, ein Transport- und Verteilersystem und ein Verfahren zum Transportieren und Verteilen von Gütern.

Die DE 10 2022 107 117 A1 betrifft eine Handhabungsvorrichtung zu einer Übergabe von Produkten, eine Produktionsmaschine mit einer entsprechenden Handhabungsvorrichtung sowie ein Verfahren zu einer Übergabe von Produkten.

Die DE 20 2011 003 546 U1 betrifft ein Behälterhandlings- und Transportsystem.

Die US 2011 / 0 061 995 A1 betrifft ein Tablar und eine Vorrichtung zum Entfernen von Kartons aus Tablaren.

Die DE 103 13 577 B4 betrifft ein automatisiertes System und Verfahren zum Lagern und Kommissionieren von Artikeln.

Die WO 2017/036778 A1 beschreibt ein System gemäß dem Oberbegriff des Anspruchs 1. Die Offenbarung betrifft gemäß ihrer Zusammenfassung ein Lager- und Kommissioniersystem, insbesondere für Case-Pick Anwendungen, zum vollautomatisierten Kommissionieren von Lagereinheiten, das aufweist: eine Regalanordnung, die einen stationär angeordneten Regalblock aufweist, wobei der Regalblock mindestens ein Regal mit einer Vielzahl von beweglichen Lagerplätzen aufweist, wobei jeder der beweglichen Lagerplätze zur Pufferung einer der Lagereinheiten eingerichtet ist; ein FTS mit einer Vielzahl von FTF, die autonom entlang von (frei wählbaren) Fahrwegen beweglich sind, wobei jedes der FTF ein Lastaufnahmemittel aufweist, wobei die LAM der FTF und die beweglichen Lagerplätze eingerichtet sind, die Lagereinheiten untereinander auszutauschen; eine Austauschzone, die überlappend zwischen der Regalanordnung und dem FTS angeordnet ist, so dass die beweglichen Lagerplätze und die FTF in die Austauschzone hinein und aus der Austauschzone heraus bewegbar sind; und einer Steuerung, die eingerichtet ist, Bewegungen der FTF und der beweglichen Lagerplätze so aufeinanderabzustimmen, dass zu vorgegebenen Zeitpunkten vorgegebene Lagereinheiten zwischen vorgegebenen FTF und vorgegebenen beweglichen Lagerplätzen austauschbar sind.

Die Fig. 5 der WO 2017/036778 A1 eine perspektivische Teilansicht einer zweiten Ausführungsform deren Systems, wobei ein Lagerlift isoliert dargestellt ist, und auf S. 13 wird in den Zeilen 9-22 das Folgende offenbart:

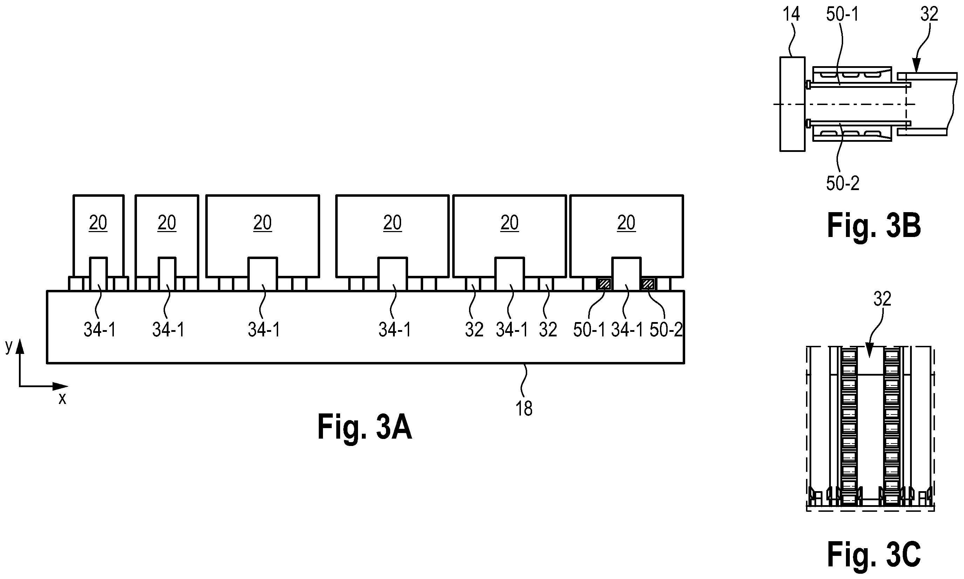

"S.13, Z.9-22: *Fig. 3* *zeigt eine perspektivische Teilansicht einer ersten Ausführungsform des Systems 10, bei der vertikal umlaufende Regale 38 eingesetzt werden, die vorzugsweise abstandsfrei zueinander angeordnet sind und von denen in der* *Fig. 3* *exemplarisch ein einzelnes vertikal umlaufendes Regal 38 verdeutlicht ist. Das vertikal umlaufende Regal 38 weist eine Vielzahl der Regalböden 60 (bewegliche Lagerplätze 20) auf, von denen lediglich ein unterster Regalboden 60-1 detailliert gezeigt ist. Die Regalböden 60 sind schwenkbar an den Zugmitteln 62 (z.B. Kette) gelagert, die vorzugsweise im Bereich der Stirnseiten des vertikal umlaufenden Regals* 38 *angeordnet sind. Die Zugmittel 62 sind um horizontale Achsen 64 mittels nicht näher gezeigten Antrieben drehbar, wie es durch Pfeile 66 angedeutet ist. Die Steuerung 16 kommuniziert beispielsweise drahtlos (siehe Pfeil 68) mit den Antrieben des vertikal umlaufenden Regals 38, um einen gewünschten (durch die Steuerung 16 vorgegebenen) Regalboden 60, z.B. den Regalboden 60-1, in eine unterste Stellung zu bringen, wo sich die Austauschzone 18 befindet, um Lagereinheiten 70 mit dem oder den FTF 22 auszutauschen."*

Es ist daher eine Aufgabe der vorliegenden Offenbarung, ein (Lager- und Kommissionier-) System mit einem Lagerlift bereitzustellen, in den die Lagerbehälter effizienter und einfacher ein- und auslagerbar sind.

Diese Aufgabe wird gelöst durch ein System mit einem Lagerlift und mit mindestens einem (automatisierten, fahrerlosen Transport-)Fahrzeug mit einem Fahrzeug-Lastaufnahmemittel, LAM, wobei der Lagerlift aufweist: eine Vielzahl von (lagerliftinternen) Lagerlift-Tablaren, die jeweils eingerichtet sind, einen oder mehrere Lagerbehälter aufzunehmen, zu puffern und abzugeben; eine Regalsäule in einem Inneren des Lagerlifts, die eine Vielzahl von vertikal übereinander angeordneten (unbeweglichen) Lagerplätzen definiert, wobei jeder der Lagerplätze eingerichtet ist, mindestens eines der Lagerlift-Tablare (horizontal hintereinander) aufzunehmen; eine Bedienöffnung, die (lagerplatzfrei) innerhalb der Regalsäule definiert ist, und eingerichtet ist, einen Zugriff von außen auf eines der Lagerlift-Tablare zu ermöglichen, das sich in der Bedienöffnung befindet; und einen Vertikalförderer im Inneren, der ein vertikal bewegliches Lift-Lastaufnahmemittel aufweist, das eingerichtet ist, die Lagerlift-Tablare nach dem Ware-zum-Manipulator-Prinzip horizontal in die Bedienöffnung sowie in die Lagerplätze hinein und heraus zu bewegen; wobei in jedem der Lagerlift-Tablare eine Vielzahl von vertikal geneigten Förderbahnen vorgesehen sind, die sich parallel zueinander entlang einer Tiefe des jeweiligen Lagerlift-Tablars erstrecken, die über eine Länge des jeweiligen Lagerlift-Tablars verteilt angeordnet sind und die jeweils zumindest an einem ihrer Enden ein Stoppelement aufweisen; und wobei das Fahrzeug-Lastaufnahmemittel eingerichtet ist, die Lagerbehälter aus dem sich in der Bedienöffnung befindlichen Lagerlift-Tablar aufzunehmen und die Lagerbehälter an das sich in der Bedienöffnung befindliche Lagerlift-Tablar abzugeben.

Das hier vorgeschlagene System erlaubt eine Automatisierung der Einlagerung und Auslagerung von Lagerbehältern in und aus Lagerlift-Tablaren, ohne dass die Tablare den Lagerlift zu diesem Zweck verlassen. Die Einlagerung und Auslagerung der Lagerbehälter erfolgt direkt in der Bedienöffnung des Lagerlifts mittels eines einfach aufgebauten Fahrzeugs von außen.

Zur Ein- und Auslagerung werden also Fahrzeuge, insbesondere autonome mobile Roboter, eingesetzt, die im Gegensatz zu Knickarmrobotern nur wenig Bewegungsraum brauchen und (hinsichtlich der Bewegungsachsen) einfacher aufgebaut sind.

Die Nachfüllung des Lagerlifts erfolgt vollautomatisch über die fahrerlosen Transportfahrzeuge.

Die Handhabung der Last (Einlagerung und Auslagerung) erfolgt vollständig sicher durch die Fahrzeuge, so dass keine Gefahr besteht, dass sich Bedienpersonen verletzen können.

Die hier vorgeschlagene Lösung ermöglicht einen Mischbetrieb zwischen Fahrzeugen (Replenishment) und manuellen Kommissionierern.

Mehrere Fahrzeuge können ein und denselben Lagerlift gleichzeitig bedienen, was den Ein- und Auslager-Durchsatz erhöht.

Eine mehrfach tiefe Lagerung von Lagerbehältern innerhalb des gleichen Lagerlift-Tablars ist möglich. Die Lagerdichte erhöht sich dadurch.

Es können unterschiedliche Lagerbehältergrößen gehandhabt werden (z.B.: 400 x 600 mm, 300 x 400 mm, 200 x 300 mm usw.). Der Lagerlift-Betreiber kann die Lagerlift-Tablare nach seinen Wünschen und Maßgaben mit Lagerbehältern bestücken, was insbesondere vom Produktsortiment abhängig sein kann.

Es können unterschiedlich breite Kanäle mittels der Förderbahnen benutzt werden, insbesondere um sich an unterschiedliche Lagerbehälterdimensionen anzugleichen.

Es können unterschiedliche Lagerhilfsmittel (neben den Behältern) eingesetzt werden, so dass der Lagerlift-Betreiber unterschiedliche Produkte besser einlagern kann.

Vorzugsweise weist das Fahrzeug-Lastaufnahmemittel einen angetriebenen (insbesondere horizontal ausgerichteten) Förderer auf, um einzulagernde Lagerbehälter auf das sich in der Bedienöffnung befindliche Lagerlift-Tablar zu schieben und um auszulagernde Lagerbehälter aus denen sich in der Bedienöffnung befindlichen Lagerlift-Tablar zu ziehen.

Die Tatsache, dass der Förderer angetrieben ist, ermöglicht einen Verzicht auf einen Antrieb innerhalb des Lagerlifts zum Ein- und Auslagern der Lagerbehälter. Das Fahrzeug trägt die entsprechenden Antriebe und die entsprechende Sensorik mit sich, so dass der Lagerlift kompakt gehalten werden kann und eine große Lagerdichte möglich ist.

Insbesondere weist das Fahrzeug-Lastaufnahmemittel ein oder mehrere Zinken auf, die so angeordnet sind, dass sie (von außen) horizontal in Freiräume zwischen den Förderbahnen, und insbesondere auch zwischen den Stoppelementen einfahrbar sind, vorzugsweise um die Lagerbehälter anschließend vertikal kämmend aus dem in der Bedienöffnung befindlichen Lagerlift-Tablar auszuheben.

Die Stoppelemente sind fix und müssen nicht geschaltet werden. Der Steuerungs- und Überwachungsaufwand ist reduziert.

Vorzugsweise ist das Fahrzeug-Lastaufnahmemittel höhenverstellbar.

Die Höhenverstellbarkeit ermöglicht das kämmende Ausheben der Lagerbehälter sowie das Ein- und Auslagern auf unterschiedlichen Höhen (relativ zum Tablar).

Weiter ist es von Vorteil, dass die Stoppelemente zwischen einer Blockade-Stellung und einer Freigabe-Stellung, insbesondere von einer entfernt angeordneten Steuerung oder vom Fahrzeug, schaltbar sind.

In diesem Fall muss das Fahrzeug-LAM zum Auslagern nicht kämmend mit dem Tablar interagieren. Das Fahrzeug kann von außen an das Tablar in der Bedienöffnung herangefahren werden, um einen Behälteraustausch zu initiieren. Das Fahrzeug-LAM und das Tablar überlappen sich während des Austauschs nicht, so dass keine Kollisionsgefahr besteht.

Vorzugsweise sind die Förderbahnen einspurig oder mehrspurig ausgebildet.

Dies ermöglicht eine gute Verteilung der Last der Lagerbehälter über die Förderbahnen. Je nach Anwendung werden ein- oder mehrspurige Förderbahnen eingesetzt.

Vorzugsweise weist das System ferner einen Kippmechanismus auf, der eingerichtet ist, das in der Bedienöffnung befindliche Lagerlift-Tablar aus einer horizontalen (Lagernormal-) Stellung in eine vertikal geneigte Stellung in Richtung des Fahrzeugs zu kippen, so dass die Enden der Förderbahnen, die in der horizontalen Stellung tiefer als die anderen Enden liegen, in der vertikal geneigten Stellung höher als die anderen Enden der Förderbahnen liegen.

Die Tablare können somit über beide Längsseiten be- und entladen werden. Dies bedeutet mit anderen Worten, dass der Lagerlift mit zwei Bedienöffnungen versehen werden kann, so dass die Fahrzeuge von links und rechts an den Lagerlift heranfahren können. Insbesondere können zwei Fahrzeuge gleichzeitig am Lagerlift agieren.

Vorzugsweise sind die Förderbahnen passiv ausgebildet, d.h. sie weisen keinen eigenen Antrieb auf.

In diesem Fall kann Platz im Bereich des Lagerlifts eingespart werden, der dann zum Lagern benutzt werden kann. Die Lagerbehälter bewegen sich mittels Schwerkraft von allein in Richtung der Kommissionierer und Fahrzeuge.

Die Förderbahnen können durch freidrehende Rollenbahnen oder durch Gleitschienen implementiert werden.

Die Lagerlift-Tablare sind Tablare, die sich insbesondere über eine gesamte Länge der Regalsäulen erstrecken.

Die Stoppelemente können Teil eines Rands des Lagerlift-Tablars sein, wobei der Rand insbesondere (in der Umfangsrichtung des Tablars beabstandete) Aussparungen aufweist, die ein kämmendes Eindringen des Fahrzeug-LAM zulassen.

Vorzugsweise weist der Lagerlift zwei Regalsäulen auf, von denen mindestens eine Regalsäule mindestens eine Bedienöffnung aufweist. Für die Bedienöffnungen gibt es keine Beschränkung hinsichtlich der Anzahl und Positionierung in den Regalsäulen. Besonders bevorzugt weist der Lagerlift zwei Regalsäulen mit jeweils einer Bedienöffnung auf.

Es versteht sich, dass die vorstehend genannten und die nachstehend noch zu erläuternden Merkmale der beanspruchten Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der beanspruchten Erfindung ergeben sich aus der nachfolgenden Beschreibung bevorzugter Ausführungsbeispiele unter Bezugnahme auf die Zeichnungen. Es zeigen:
- Fig. 1: eine Seitenansicht eines Systems mit einem Lagerlift und einem Fahrzeug;
- Fig. 2: eine Seitenansicht eines schematisch dargestellten Lagerlift-Tablars in seiner Normalstellung (Fig. 2A) und in seiner geneigten Stellung (Fig. 2B);
- Fig. 3: eine Vorderansicht eines geneigten Lagerlift-Tablars (Fig. 3A), eine schematische Draufsicht auf ein Fahrzeug mit einem (aktiv angetriebenen) Zinken-LAM;
- Fig. 4: einen Einlagerungsvorgang (Fig. 4A-4N) und einen Auslagerungsvorgang (Fig. 4O-4Z);
- Fig. 5: eine erste Abwandlung des Systems;
- Fig. 6: eine weitere Abwandlung des Systems; und
- Fig. 7: eine schematisch dargestellte Einlagerung (Fig. 7A) sowie eine kämmende Auslagerung (Fig. 7B) mit einem Zinken-LAM in einer Seitenansicht.

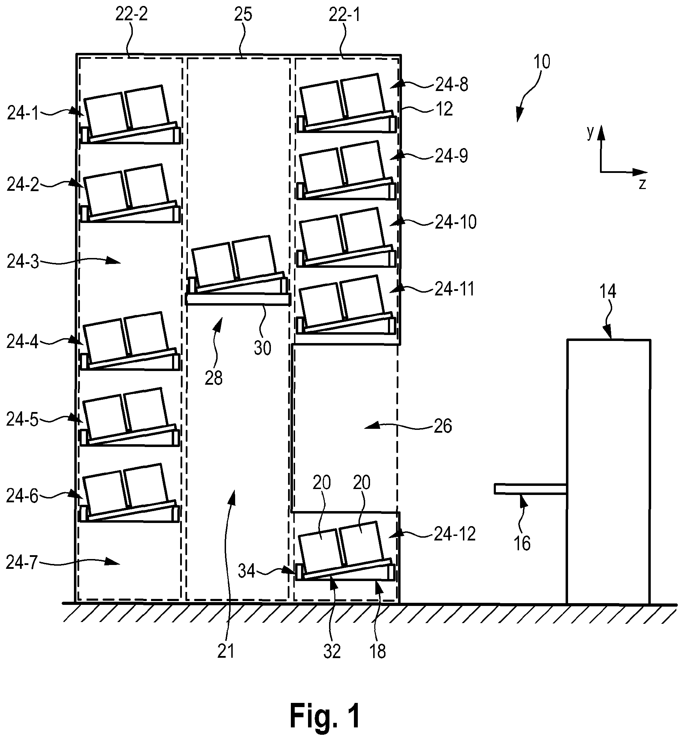

Fig. 1 zeigt ein Lager- und Kommissioniersystem 10, das nachfolgend auch nur als System 10 bezeichnet werden wird. Das System 10 weist einen Lagerlift 12 und ein, vorzugsweise fahrerloses, (Transport-)Fahrzeug, FTF, 14, das nachfolgend auch nur als Fahrzeug 14 bezeichnet werden wird, mit einem (Fahrzeug-)Lastaufnahmemittel, LAM, 16 auf. Der Lagerlift 12 kann nach der eingangs erwähnten Art ausgebildet sein. Der Lagerlift 12 stellt eine automatische (in sich geschlossene) Lager- und Kommissioniereinheit dar, wie oben bereits erläutert, die nach dem Ware-zum-Manipulator-Prinzip betrieben wird, wobei der Manipulator (beim Kommissionieren) ein Mensch oder eine Maschine (Roboter) sein kann. Nachfolgend wird exemplarisch nur ein einzelner Lagerlift 12 betrachtet werden. Es versteht sich, dass das System 10 eine Vielzahl von Lagerliften 12 und/oder eine Vielzahl von Fahrzeugen 14 umfassen kann.

Der Lagerlift 12 umfasst eine Vielzahl von (lagerliftinternen) Lagerlift-Tablaren 18, die nachfolgend auch kurz als Tablare 18 bezeichnet werden und die jeweils eingerichtet sind, ein oder mehrere Lagerbehältern 20 (jeweils in der Längsrichtung X nebeneinander und/oder in der Tiefenrichtung Z hintereinander) aufzunehmen, zu puffern und abzugeben. Lagerliftintern bedeutet, dass die Tablare 18 den Lagerlift 12 zum Befüllen oder Nachfüllen mit den Lagerbehältern 20 nicht verlassen.

Der Lagerlift 12 umfasst generell ein nicht näher bezeichnetes Regal (aus Pfosten, Querträgern, Längsträgern, Aufnahmewinkeln, etc.), das ein oder mehrere Regalsäulen 22 in einem Inneren 21 des Lagerlifts 12 aufweisen kann.

In der Fig. 1 sind exemplarisch zwei Regalsäulen 22-1 und 22-2 (mit Strichlinien umrandete Bereiche) gezeigt. Jede der Regalsäulen 22 weist generell eine Vielzahl von vertikal (in der Höhenrichtung Y) übereinander angeordneten Lagerplätzen 24 auf, wo jeweils eines der Lagerlift-Tablare 18 statisch im Regal lagerbar ist. Es versteht sich, dass bei einer mehrfachtiefen Auslegung der Regalsäulen 22 entsprechend viele Lagerplätze 24 horizontal hintereinander (in der Tiefenrichtung Z) angeordnet sind. Mindestens eine der Regalsäulen 22, hier die Säule 22-1, weist eine Handhabungsöffnung bzw. Bedienöffnung 26 auf, wo die Lagerbehälter 20 automatisiert gehandhabt werden, indem sie dort entnommen (Auslagerung) und/oder dorthin abgegeben (Einlagerung) werden, wie es unten noch genauer erläutert werden wird.

Die Regalsäulen 22-1 und 22-2 können symmetrisch zueinander ausgerichtet und in der Z-Richtung beabstandet zueinander sein, so dass beidseitig auf die Tablare 18 zugegriffen werden kann, und so dass sie einen Schacht 25, d.h. einen Freiraum, zwischen sich definieren, wo keine der Lagerplätze 24 vorgesehen sind. Grundsätzlich kann in jedem Schacht 25 ein Vertikalförderer 28 angeordnet werden. Zur Vereinfachung der Beschreibung wird nachfolgend ein Lagerlift 12 betrachtet, dessen Regal aus exemplarisch nur zwei Regalsäulen 16-1 und 16-2 besteht, die einen (einzigen) Schacht 24 zwischen sich definieren.

Der Vertikalförderer 28 ist im Inneren 21 des Lagerlifts 12 vorgesehen. Der Vertikalförderer 28 weist ein vertikal bewegliches Lift-Lastaufnahmemittel 30 auf, das eingerichtet ist, die Lagerlift-Tablare 18 nach dem Ware-zum-Manipulator-Prinzip horizontal in die Bedienöffnung 26 sowie in die Lagerplätze 24 zu bewegen.

Die Bedienöffnung 26 ist (lagerplatzfrei) innerhalb von zumindest einer der Regalsäulen 22 definiert und eingerichtet, einen Zugriff auf die Lagerbehälter 20 von außen zu gestatten, die auf einem der Lagerlift-Tablare 18 positioniert sind, das sich in der Bedienöffnung 26 befindet. Lagerplatzfrei bedeutet, dass dort keine (statischen) Lagerplätze 24 vorgesehen sind. Das Regal ist entsprechend eingerichtet.

Vorzugsweise in jedem der Lagerlift-Tablare 18 ist eine Vielzahl von vertikal geneigten (passiven) Förderbahnen 32 vorgesehen, die sich parallel zueinander entlang einer Tiefe (Z-Richtung) des jeweiligen Lagerlift-Tablars 18 erstrecken, die über eine Länge (X-Richtung) des jeweiligen Lagerlift-Tablars 18 verteilt angeordnet sind und die jeweils zumindest an ihren tiefer liegenden Enden (sowie optional auch an ihren höher liegenden Enden) ein Stoppelement 34 aufweisen, das durch einen Tablarrand 38 realisiert sein kann.

Das Fahrzeug-Lastaufnahmemittel 16 kann (in der Y-Richtung) höhenverstellbar sein und ist eingerichtet, die Lagerbehälter 20 aus einem sich in der Bedienöffnung 26 befindlichen Lagerlift-Tablar 18 aufzunehmen und die Lagerbehälter 20 an ein sich in der Bedienöffnung 26 befindliches Lagerlift-Tablar 18 abzugeben.

Die Bedienöffnung 26 stellt generell eine Schnittstelle des Lagerlifts 12 zur Außenwelt dar. Der Lagerlift 12 kann mit Ausnahme der Bedienöffnung 26 eingehaust sein. Im Bereich der Bedienöffnung 26 werden solche Tablare 18 zur weiteren Bearbeitung präsentiert, die z.B. zum Bearbeiten eines Kommissionierauftrags benötigt werden. Ein Kommissionierauftrag setzt sich allgemein aus einem oder mehreren Produktenarten in vorgegebenen Stückzahlen zusammen, die in einem oder mehreren der Lagerbehälter 20 gelagert sind. Vorzugsweise ist jeder der Lagerbehälter 20 immer nur mit einem Typ eines Produkts beladen. Verschiedene Produkttypen können aber auf dem gleichen Tablar 18 gelagert werden.

Es versteht sich, dass die Tablare 18 auch Unterteilungen aufweisen können, um mehrere verschiedene Produkttypen auf dem Tablar 18 zu lagern.

Der Kommissionierauftrag gibt vor, welche Produkttypen in welcher Anzahl benötigt werden. Die entsprechenden Tablare 18 sind nacheinander, vorzugsweise in einer vorgegebenen Reihenfolge (Sequenz), automatisiert zur Bedienöffnung 26 zu bewegen. Ein Kommissionierer 58 (Mensch oder Roboter, nicht gezeigt), der außerhalb des Lagerlifts 12 positioniert ist, entnimmt die durch den Kommissionierauftrag vorgegebene Anzahl von Produkten aus dem oder den Lagerbehältern 20 und gibt sie an ein (nicht dargestelltes) Auftragsladehilfsmittel (z.B. einen Auftragsbehälter) ab.

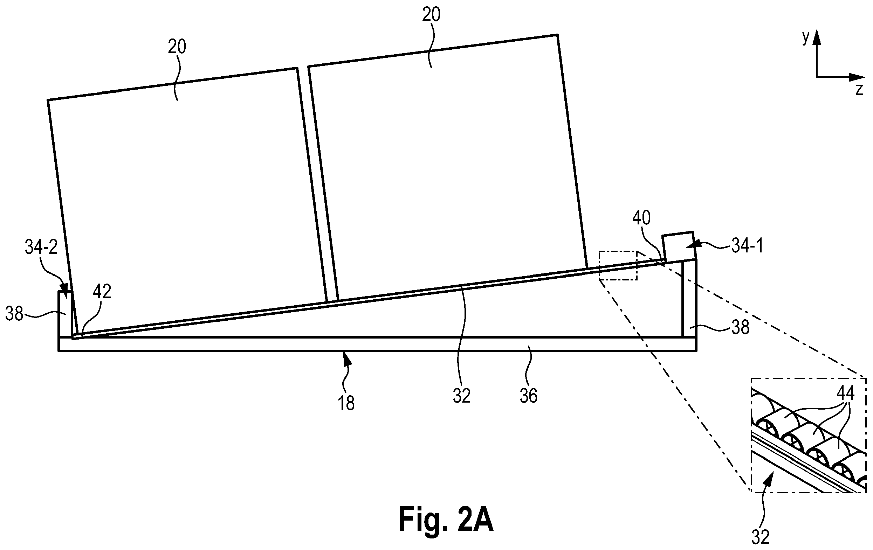

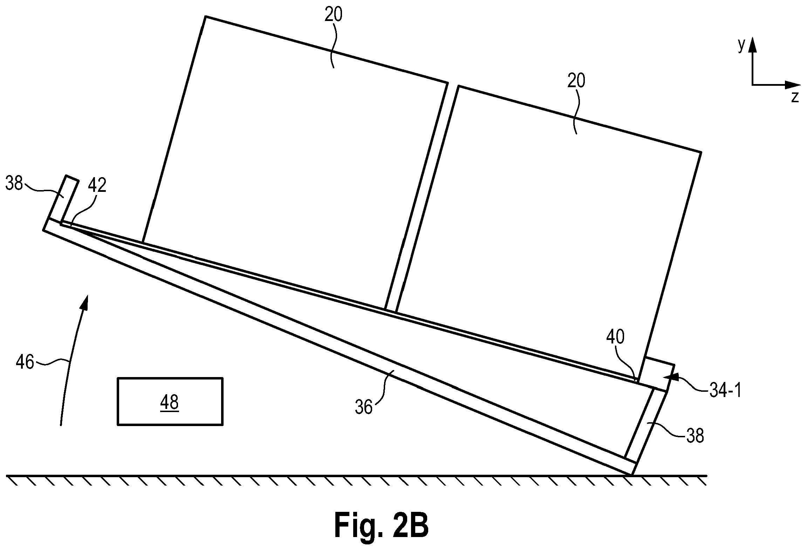

Fig. 2 zeigt Seitenansichten z.B. des Lagerlift-Tablars 18, das in der Fig. 1 im unteren Bereich des Lagerlifts 12 dem Fahrzeug 14 in der Z-Richtung direkt gegenüberliegend eingelagert ist. Das isoliert dargestellte Tablar 18 weist einen, vorzugsweise geschlossenen, Boden 36 auf, der horizontal orientiert ist, wenn das Tablar 18 sich in einem der Lagerplätze 24 befindet, wie in Fig. 1 gezeigt. Das Tablar 18 kann einen umlaufenden Rand 38 aufweisen. Der Rand 38 steht vorzugsweise senkrecht auf dem Boden 36. Der Rand 38 ist vorzugsweise in der Umfangsrichtung geschlossen.

Die Förderbahn 32, von denen in der Fig. 2A exemplarisch nur eine dargestellt ist, sind vertikal geneigt orientiert, erstrecken sich im Wesentlichen entlang der Z-Richtung und weisen ein erstes (in Fig. 2A oberes) Ende 40 und ein zweites (in Fig. 2A unteres) Ende 42 auf. Die Förderbahnen 32 sind vorzugsweise als Rollenbahnen mit freilaufenden Rollen 44, wie in der Detailansicht unten rechts in der Fig. 2A angedeutet.

Die Förderbahnen 32 sind vorzugsweise passiv ausgebildet, d.h. sie weisen keinen Antrieb auf. Es versteht sich, dass die Förderbahnen 32 auch von einem anderen Typ sein können. Die Förderbahnen 32 können z.B. Gleitschienen (nicht dargestellt) sein, deren Oberseiten einen geeigneten Reibungskoeffizienten aufweisen, um die Lagerbehälter 20 gegen die Schwerkraft zum unteren Ende 42 abrutschen bzw. abgleiten zu lassen.

Die in der Fig. 2A gezeigte Förderbahn 32 weist exemplarisch an jedem ihrer Enden 40 und 42 jeweils ein Stoppelement 34 auf. Es versteht sich, dass aber auch ein einziges Stoppelement 34 an einem der Enden 40 oder 42 ausreichen kann. In der Fig. 2A ist exemplarisch ein erstes Stoppelement 34-1 am ersten Ende 40 und ein zweites Stoppelement 34-2 am zweiten Ende 42 vorgesehen. Dies gilt für alle Förderbahnen 32, auch für jene, die in der Fig. 2A nicht zu sehen sind.

Das erste Stoppelement 34-1 kann ein (in der Seitenansicht) L-förmiger Anschlag (nicht dargestellt) sein. Das zweite Stoppelement 34-2 kann z.B. durch den Rand 38 implementiert werden.

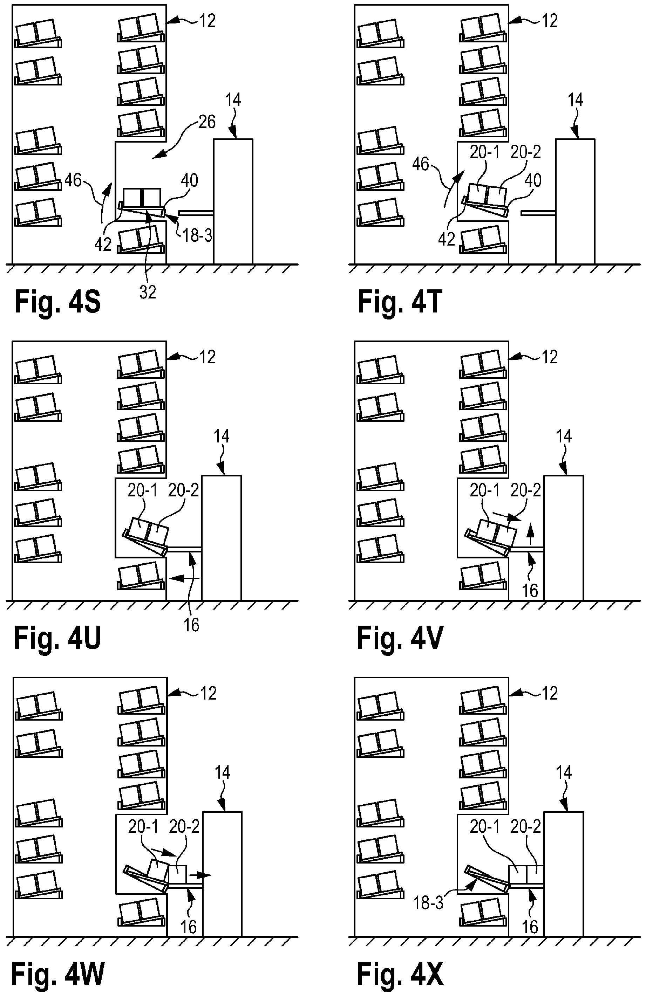

Fig. 2B zeigt das Tablar 18 der Fig. 2A in einem gekippten Zustand. Das zweite Ende 42 der Rollenbahn liegt dann in der vertikalen Richtung Y höher als das erste Ende 40. Die Lagerbehälter 20 rutschen oder rollen in diesem Fall (mittels Schwerkraft) gegen das erste Stoppelement 34-1, vgl. auch Fig. 4U. Eine entsprechende Kippbewegung 46 wird durch einen Kippmechanismus 48 verursacht, der ein optionales Element des Lagerlifts 12 sein kann und der im Bereich der Bedienöffnung 26 vorgesehen sein kann, um das Tablar 18 dort zu kippen.

Fig. 3A zeigt eine schematische Vorderansicht des Tablars 18 der Fig. 2, wenn man das Tablar 18 der Fig. 2B in der negativen Z-Richtung betrachtet. Das Tablar 18 ist so gekippt, dass die Lagerbehälter 20 zum Ende 40 der Förderbahnen 32 sich bewegen, wie es auch in Fig. 4U exemplarisch gezeigt ist.

In der Fig. 3A sind exemplarisch sechs Förderbahnen 32 veranschaulicht, die eingerichtet sind, Lagerbehälter 20 unterschiedlicher Breiten (X-Richtung) aufzunehmen. Die Förderbahnen 32 sind in der Fig. 3A exemplarisch zweispurig ausgebildet, vgl. doppelspurige Rollenbahn der Fig. 3C. Die Stoppelemente 34 können in diesem Fall zwischen den beiden Spuren der Förderbahnen 32 angeordnet werden. Es versteht sich, dass beliebig viele Förderbahnen 32 über die Länge (X-Richtung) des Tablars 18 verteilt angeordnet werden können. Die Anzahl und die Verteilung hängt von den Breiten der Lagerbehälter 20 ab. Im Beispiel der Fig. 3A reicht der Raum im Tablar 18 aus, um die sechs gezeigten Förderbahnen 32 aufzunehmen.

Die Lagerbehälter 20 auf jeder der Förderbahnen 32 weisen vorzugsweise die gleiche Breite auf, um durch optionale, sich in der z-Richtung erstreckende Führungsschienen (nicht dargestellt) an einer unbeabsichtigten Verschiebung in x-Richtung gehindert zu werden.

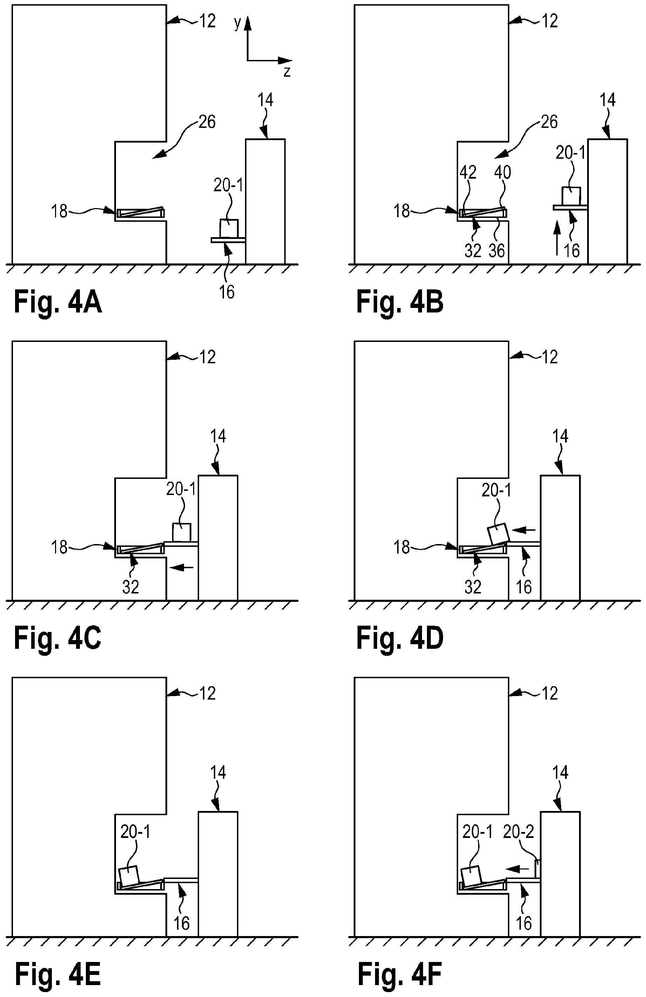

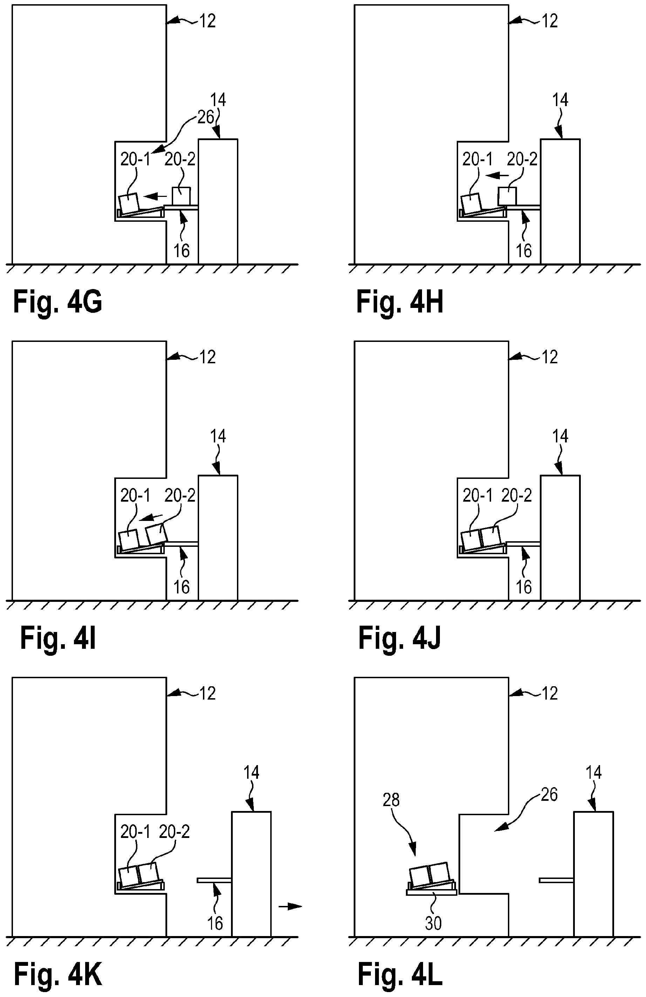

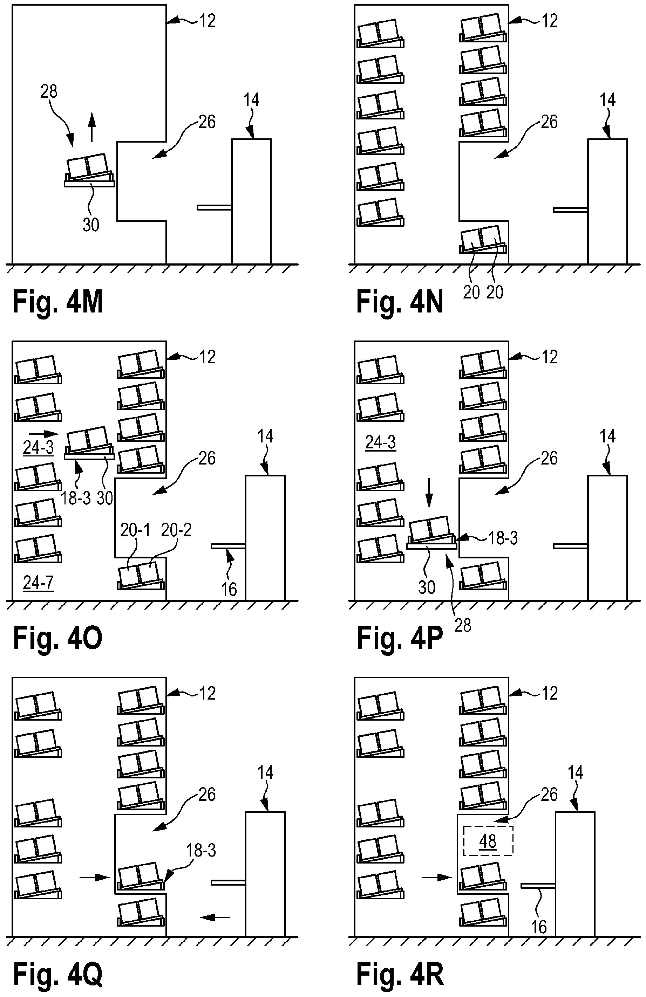

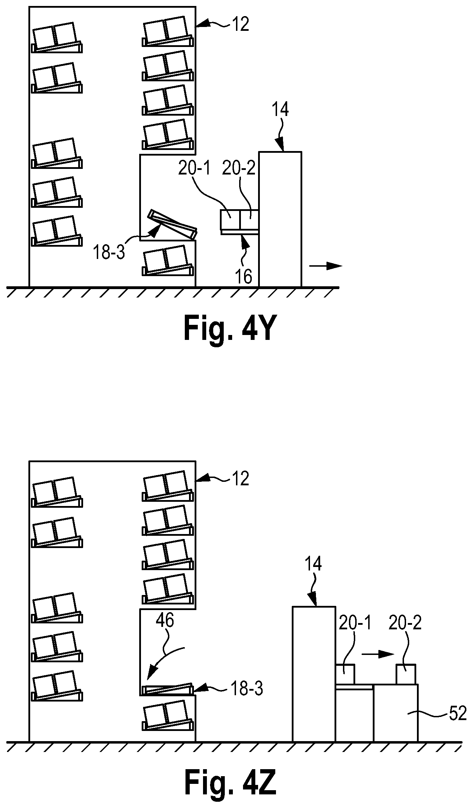

Das Fahrzeug-LAM 16 kann z.B. durch zwei Zinken 50 realisiert sein, wie es in Fig. 3B angedeutet ist. Die Zinken 50-1 und 50-2 sind in der Breitenrichtung X so zueinander beabstandet, dass sie in die Räume zwischen den Spuren der Förderbahnen 32, den Lagerbehältern 20 und den Stoppelementen 34 (horizontal) eingefahren werden können (in der Z-Richtung). Diese Situation ist in der Fig. 3A angedeutet. Startend von der in der Fig. 3A gezeigten Situation kann das Fahrzeug-LAM 16 in der positiven Y-Richtung vertikal angehoben werden, um den Lagerbehälter 20 aus dem Tablar 18 (über das Stoppelement 34-1 hinweg) auszuheben, wie es nachfolgend unter Bezugnahme auf Fig. 4 noch näher erläutert werden wird.

Es versteht sich, dass die Förderbahnen 32 in der Fig. 3 auch einspurig und generell mit mehr als zwei Spuren ausgebildet sein können. Bei der einspurigen Ausführung wäre die Rollenbahn vorzugsweise mittig relativ zu den Lagerbehältern 20 anzuordnen. Das jeweilige Stoppelement 34 könnte in diesem Fall seitlich dazu angeordnet sein.

Unter Bezugnahme auf Fig. 4 werden nachfolgend Einlagerungsvorgänge und Auslagerungsvorgänge beschrieben werden.

In den Fig. 4A-4N ist eine Einlagerungssequenz veranschaulicht, die nachfolgend näher beschrieben wird.

In Fig. 4A ist gezeigt, wie sich das Fahrzeug 14 der Bedienöffnung 26 des Lagerlifts 12 nähert. Das Fahrzeug 14 kann einen oder mehrere der Lagerbehälter 20 mit sich führen. In der Fig. 4A ist nur einer von zwei Lagerbehältern 20 zu sehen, die das Fahrzeug 14 mit sich führen kann. Das Fahrzeug 14 kann einen oder mehrere Lagerbehälter 20 mit sich führen.

Das Fahrzeug-LAM 16 wird vertikal in eine passende Höhe gebracht, wie es in Fig. 4B gezeigt ist, um anschließend in der Z-Richtung an das (leere) Tablar 18 zu fahren, wie es in Fig. 4C gezeigt ist. Das Tablar 18 ist in der Fig. 4C in der Normalstellung gezeigt, in welcher der Boden 36 horizontal orientiert ist.

Generell gilt, dass das Fahrzeug-LAM 16 mit einem angetriebenen Förderer (nicht dargestellt) versehen sein kann, um den oder die Lagerbehälter 20 vom Fahrzeug 14 in Richtung des leeren Tablars 18 zu fördern, wie es in der Fig. 4D gezeigt ist. In der Fig. 4E ist der vom Fahrzeug 14 abgegebene Lagerbehälter 20-1 (mittels Schwerkraft, d.h. selbstständig) bis an das untere Ende 42 (vgl. Fig. 2A) der Förderbahnen 32 gerollt oder gerutscht. Danach kann ein weiterer Lagerbehälter 20-2 vom Fahrzeug 14 an das teilweise gefüllte Tablar 18 auf die gleiche Weise abgegeben werden, wie oben beschrieben und wie in den Fig. 4F-4J gezeigt. Danach kann sich das Fahrzeug 14 einer anderen Aufgabe widmen, wie es in Fig. 4K angedeutet ist, in dem das Fahrzeug sich vom Lagerlift 12 entfernt.

Der Vertikalförderer 28 des Lagerlifts 12 zieht das so gefüllte Tablar 18 auf sein LAM 30, vgl. Fig. 4L, und bewegt sich dann vertikal zu einem zugewiesenen Lagerplatz 24, wie in Fig. 4N angedeutet. Fig. 4N zeigt den Lagerlift 12 in einem nahezu vollständig gefüllten Zustand.

Unter Bezugnahme auf die Figs. 4O-4Z wird nachfolgend ein exemplarischer Auslagerungsvorgang beschrieben werden.

Wie in Fig. 4O gezeigt, holt der Vertikalförderer 28 ein gewünschtes Tablar 18 aus seinem Lagerplatz 24-3 ab, um es auf die Höhe der Bedienöffnung 26 zu bringen, wie in Fig. 4P gezeigt. Dann gibt der Vertikalförderer 28 das gewünschte Tablar 18 horizontal an die Bedienöffnung 26 ab, wie in Fig. 4Q gezeigt.

Der Lagerlift 12 kann mit dem optionalen Kippmechanismus 48 versehen sein, wie in Fig. 4R angedeutet. Der Kippmechanismus 48 kippt das gewünschte Tablar 18-3 derart, dass das eigentlich untere Ende 42 der Förderbahnen 32 höher als das eigentlich obere Ende 40 liegt, wie in der Sequenz der Figs. 4R-4T gezeigt. Anschließend wird das Fahrzeug 14 mit seinem LAM 16 an das ihm zugewandte Ende der gewünschten Förderbahnen 32 bewegt, wie in Fig. 4U gezeigt. Das Fahrzeug 14 kann den oder die Lagerbehälter 20 (durch eine leichte Bewegung des LAM 16 in der vertikalen Richtung Y) ausheben, wie oben beschrieben und in Fig. 4V angedeutet. Die Lagerbehälter 20 bewegen sich schwerkraftbedingt in Richtung des Fahrzeugs 14. Das Fahrzeug 14 kann die Auslagerung unterstützen, in dem der hier nicht näher bezeichnete Förderer des LAM 16 entsprechend betrieben wird, um die Lagerbehälter 20 abzuziehen. Dies ist in der Sequenz der Fig. 4V-4X gezeigt.

Es versteht sich, dass, abweichend von der Darstellung in der Sequenz der Fig. 4V-4X, auch nur ein Lagerbehälter 20-2 durch das LAM 16 des Fahrzeugs 14 entnommen werden kann und ein Lagerbehälter 20-1 auf dem Tablar 18 verbleibt, wo es in der geneigten Stellung durch die Schwerkraft bis zum Stoppelement des Tablars 18 gefördert wird.

Anschließend kann das Fahrzeug 14 vom Lagerlift 12 wegbewegt werden, vgl. Fig. 4Y, und zu einer gewünschten Zielstelle, wie z.B. einer externen Kommissionierstation 52 verfahren werden, vgl. 4Z, wo der oder die auslagerten Lagerbehälter 20 abgegeben werden können.

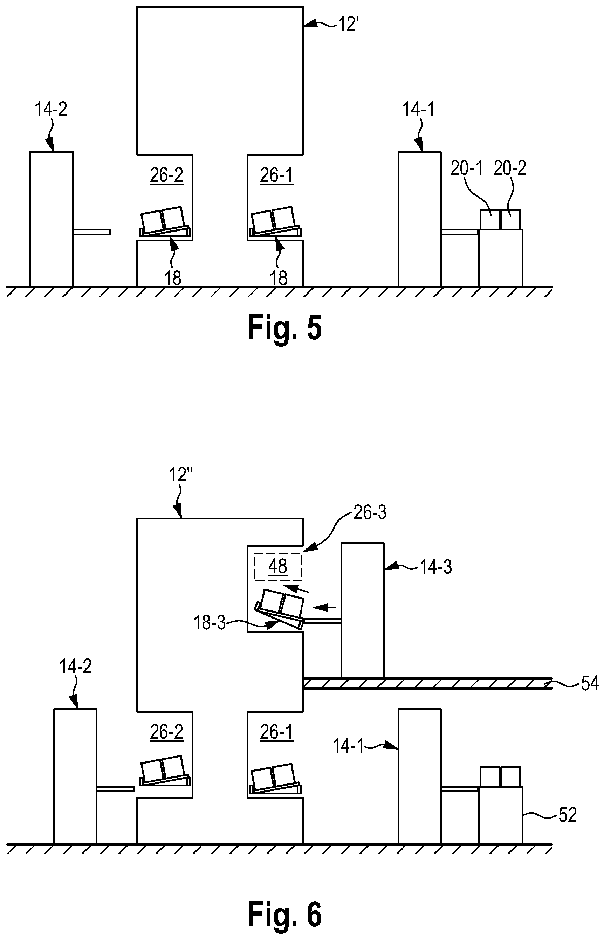

Fig. 5 zeigt eine Seitenansicht des Systems 10 mit einem leicht abgewandelten Lagerlift 12', der sich von dem Lagerlift 12 der bisher beschriebenen Figuren lediglich darin unterscheidet, dass neben der bereits vorhandenen (ersten) Bedienöffnung 26-1 eine zweite Bedienöffnung 26-2 vorgesehen ist, die der ersten Bedienöffnung 26-1 in der Querrichtung Z (in der anderen Regalsäule) gegenüberliegen kann. Des Weiteren kann beim Lagerlift 12' der Fig. 5 auf den Kippmechanismus 48 (generell) verzichtet werden, insbesondere im Bereich der ersten Bedienöffnung 26-1, wenn z.B. die Einlagerungen (nur) über die erste Bedienöffnung 26-1 erfolgen und die Auslagerungen (nur) über die zweite Bedienöffnung 26-2 erfolgen.

Fig. 6 zeigt eine weitere Abwandlung des Systems der Fig. 5. Der Lagerlift 12" der Fig. 6 unterscheidet sich vom Lagerlift 12' der Fig. 5 zusätzlich darin, dass eine dritte Bedienöffnung 26-3 vorgesehen ist. Die dritte Bedienöffnung 26-3 kann oberhalb der ersten Bedienöffnung 26-1 vorgesehen sein, um eine weitere (z.B. höher gelegene) Fahrzeug-Ebene 54 zu definieren. In der Fig. 6 kann über die dritte Bedienöffnung 26-3 ein- und ausgelagert werden, wenn die dritte Bedienöffnung 26-3 mit dem (optionalen) Kippmechanismus 48 versehen ist. In der Fig. 6 lagert das dritte Fahrzeug 14-3 Lagerbehälter 20 aus dem dritten Tablar 18-3 aus, indem das dritte Tablar 18-3 in Richtung des Fahrzeugs 14-3 geneigt wird.

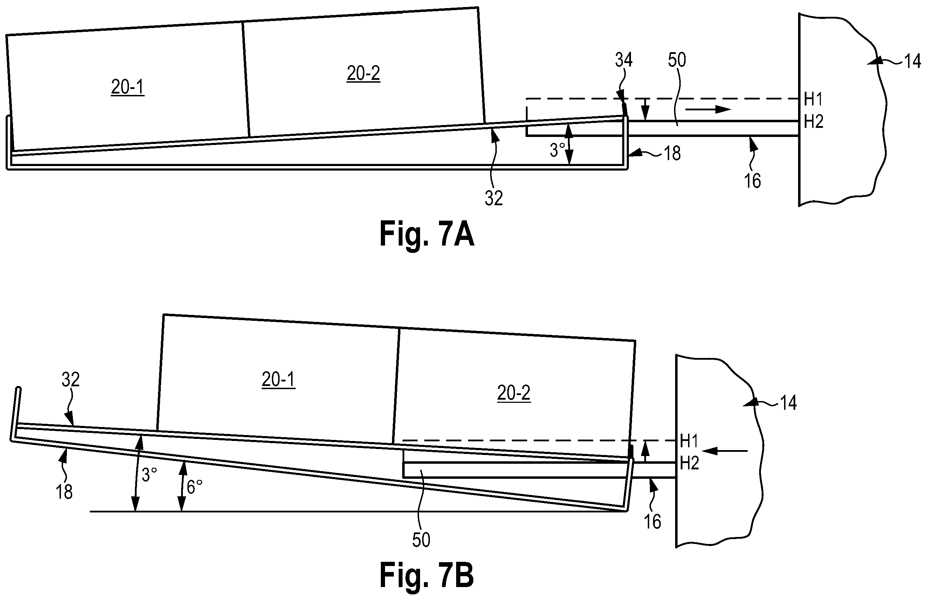

Fig. 7A veranschaulicht einen Einlagerungsvorgang, bei dem die Zinken 50 beim Einfahren des LAM 16 mit einem einzulagernden Lagerbehälter 20-2 zunächst oberhalb des Anschlags 34 lokalisiert sind und in der Z-Richtung mit der Förderbahn 32 überlappen, ohne dass das Tablar 18 gekippt ist. Sobald das LAM das Tablar 18 in z-Richtung so weit überfahren hat, dass ein Lagerbehälter 20-2 vollständig über dem Tablar angeordnet ist, kann das LAM 16 in eine untere Position verfahren werden, so dass beim Ausfahren des LAM in positiver Z-Richtung der Lagerbehälter 20-2 vom Stoppelement 34 zurückgehalten wird und vom LAM 16 abgestreift wird. Der Lagerbehälter 20-2 bewegt sich dann durch die Schwerkraft angetrieben zum unteren Ende der Förderbahn 32, welches durch den Tablarrand 38, ein Stoppelement 34, oder einen bereits auf der Förderbahn befindlichen Lagerbehälter 20-1, gebildet werden kann.

Fig. 7B veranschaulicht ein kämmendes Ausheben des Lagerbehälters 20-2, vgl. auch Fig. 4U ff.

Der Kippmechanismus 48 wird auf der Website der Anmelderin unter der Bezeichnung "LOGITILT" als Zusatzoption für das Lagerliftsystem "LOGIMAT" beschrieben.

Es versteht sich, dass eine Einlagerung von Lagerbehältern 20 auch erfolgen kann, wenn sich das in der Bedienöffnung 26 befindliche Tablar 18 in seiner geneigten Stellung befindet, wie z.B. das Tablar 18-3 in der Fig. 6. Das Fahrzeug 14-3 kann in diesem Fall mit seinem (aktiv angetriebenen) LAM 16 die Lagerbehälter 20 "bergauf" in die Förderbahnen 32 schieben.

Ferner versteht es sich, dass die Stoppelemente 34, insbesondere das erste Stoppelement 34-1 und auch das zweite Stoppelement 34-2, durch den (Tablar-)Rand 38 selbst implementiert sein kann (vgl. Fig. 2A). Der Rand 38 kann in diesem Fall mit vertikalen Aussparungen (nicht veranschaulicht) versehen sein, die entlang den Längsseiten des Tablars 18 entsprechend beabstandet zueinander angeordnet sind, so dass das LAM 16 der Fahrzeuge 14 kämmend in das Tablar 18 eingefahren werden kann, insbesondere um die Lagerbehälter 20 zwecks einer Auslagerung auszuheben, vgl. Fig. 7B.

Die Lagerlift-Tablare 18 werden vorzugsweise lagerliftintern verwendet. Dies bedeutet, dass die Tablare 18 den Lagerlift 12 nie verlassen.

Auch versteht es sich, dass die Lagerplätze 24 des Lagerlifts 12 mehrfach tief genutzt werden können, auch wenn in den Figuren exemplarisch nur eine einfach tiefe Lagerung gezeigt ist.

Des Weiteren versteht es sich, dass an der oder den Bedienöffnungen 26 eine manuelle Kommissionierung möglich ist. Bei der manuellen Kommissionierung werden die (nicht dargestellte) Produkte, die in den Lagerbehältern 20 bevorratet sind, die wiederum in der Lagerlift-Tablaren bevorratet sind, gemäß Kommissionieraufträgen entnommen, wobei die Lagerbehälter 20 im Tablar 18 verbleiben.

Auch versteht es sich, dass, wenn oben von den Lagerbehältern 20 gesprochen wurde, damit auch andere Ladungsträger, wie z.B. Kartons, Kisten oder Ähnliches, gemeint sind.

### BEZUGSZEICHENLISTE

- 10: (Lager- und Kommissionier-) System
- 12: Lagerlift
- 14: Fahrzeug
- 16: (Fahrzeug-)LAM
- 18: (Lagerlift-)Tablar
- 20: Lagerbehälter
- 21: Inneres von 12
- 22: Regalsäule
- 24: Lagerplatz
- 25: Schacht
- 26: Bedienöffnung
- 28: Vertikalförderer
- 30: (Lift-)LAM, Lastaufnahmemittel
- 32: Förderbahn
- 34: Stoppelement
- 36: Boden von 18
- 38: Rand von 18
- 40: oberes Ende von 32
- 42: unteres Ende von 32
- 44: Rollen
- 46: Kippbewegung
- 48: Kippmechanismus
- 50: Zinken
- 52: Kommissionierstation
- 54: Fahrzeug-Ebene

## Patentansprüche

1. System (10) mit
einem Lagerlift (12) und
mindestens einem Fahrzeug (14) mit einem Fahrzeug-Lastaufnahmemittel (16);
wobei der Lagerlift (12) aufweist:
eine Vielzahl von Lagerlift-Tablaren (18), die jeweils eingerichtet sind, einen oder mehrere Lagerbehälter (20) aufzunehmen, zu puffern und abzugeben;
eine Regalsäule (22) in einem Inneren des Lagerlifts (12), die eine Vielzahl von vertikal übereinander angeordneten, unbeweglichen Lagerplätzen (24) definiert, wobei jeder der Lagerplätze (24) eingerichtet ist, mindestens eines der Lagerlift-Tablare (18) aufzunehmen;
eine Bedienöffnung (26), die innerhalb der Regalsäule (22) definiert ist, und eingerichtet ist, einen Zugriff von außen auf eines der Lagerlift-Tablare (18) zu ermöglichen, das sich in der Bedienöffnung (26) befindet; und
einen Vertikalförderer (28) im Inneren, der ein vertikal bewegliches Lift-Lastaufnahmemittel (30) aufweist, das eingerichtet ist, die Lagerlift-Tablare (18) nach dem Ware-zum-Manipulator-Prinzip horizontal in die Bedienöffnung (26) sowie in die Lagerplätze (24) ein- und auszulagern;
**dadurch gekennzeichnet, dass** in jedem der Lagerlift-Tablare (18) eine Vielzahl von vertikal geneigten Förderbahnen (32) vorgesehen sind, die sich parallel zueinander entlang einer Tiefe des jeweiligen Lagerlift-Tablars (18) erstrecken,
über eine Länge des jeweiligen Lagerlift-Tablars (18) verteilt angeordnet sind, und
jeweils zumindest an einem ihrer Enden (40, 42) ein Stoppelement (34) aufweisen; und
wobei das Fahrzeug-Lastaufnahmemittel (16) eingerichtet ist, die Lagerbehälter (20) aus dem sich in der Bedienöffnung (26) befindlichen Lagerlift-Tablar (18) aufzunehmen und die Lagerbehälter (20) an das sich in der Bedienöffnung (26) befindliche Lagerlift-Tablar (18) abzugeben.

2. System (10) nach Anspruch 1, wobei das Fahrzeug-Lastaufnahmemittel (16) einen angetriebenen Förderer aufweist, um die Lagerbehälter (20) auf das sich in der Bedienöffnung (26) befindliche Lagerlift-Tablar (18) zu schieben und um die Lagerbehälter (20) aus dem sich in der Bedienöffnung (26) befindliche Lagerlift-Tablar (18) zu ziehen.

3. System nach Anspruch 1 oder 2, wobei das Fahrzeug-Lastaufnahmemittel (16) ein oder mehrere Zinken (50) aufweist, die so angeordnet sind, dass sie horizontal in Freiräume zwischen den Förderbahnen (32), und insbesondere den Stoppelementen (34) einfahrbar sind, insbesondere um die Lagerbehälter (20) anschließend vertikal kämmend aus dem in der Bedienöffnung (26) befindlichen Lagerlift-Tablar (18) auszuheben.

4. System nach einem der Ansprüche 1 bis 3, wobei das Fahrzeug-LAM (16) höhenverstellbar ist.

5. System nach einem der Ansprüche 1 bis 4, wobei die Stoppelemente (34) zwischen einer Blockade-Stellung und einer Freigabe-Stellung, insbesondere von einer entfernt angeordneten Steuerung oder vom Fahrzeug (14), schaltbar sind.

6. System nach einem der Ansprüche 1 bis 5, wobei die Förderbahnen (32) einspurig oder mehrspurig ausgebildet sind.

7. System (10) nach einem der Ansprüche 1 bis 6, das ferner einen Kippmechanismus (48) aufweist, der eingerichtet ist, das in der Bedienöffnung (26) befindliche Lagerlift-Tablar (18) aus einer horizontalen Stellung in eine vertikal geneigte Stellung in Richtung des Fahrzeugs (14) zu kippen, so dass die Enden (42) der Förderbahnen (32), die in der horizontalen Stellung tiefer als die anderen Enden (40) liegen, in der vertikal geneigten Stellung höher als die anderen Enden (40) der Förderbahnen (32) liegen.

8. System (10) nach einem der Ansprüche 1 bis 7, wobei die Förderbahnen (32) passiv, d.h. ohne eigenen Antrieb, ausgebildet sind.

9. System (10) nach einem der Ansprüche 1 bis 8, wobei die Förderbahnen durch freidrehende Rollenbahnen oder durch Gleitschienen implementiert sind.

10. System (10) nach einem der Ansprüche 1 bis 8, wobei die Lagerlift-Tablare (18)) Tablare sind, die sich insbesondere über eine gesamte Länge der Regalsäulen (16) erstrecken.

11. System (10) nach einem der Ansprüche 1 bis 10, wobei die Stoppelemente (34) Teil eines Rands (38) des Lagerlift-Tablars (18) sind, wobei der Rand (38) insbesondere Aussparungen aufweist, die ein kämmendes Eindringen des Fahrzeug-LAMs (16) zulassen.

12. System (10) nach einem der Ansprüche 1 bis 11, wobei der Lagerlift (12) zwei Regalsäulen (22-1, 22-2) mit jeweils einer Bedienöffnung (26) aufweist.

## Claims

1. A system (10) including
a storage lift (12) and
at least one vehicle (14) comprising a vehicle load-handling device (16);
wherein the storage lift (12) comprises:
a plurality of storage-lift trays (18), which are each configured to receive, buffer and deliver one or more storage containers (20);
a rack column (22) in an interior of the storage lift (12) defining a plurality of immovable storage locations (24) arranged vertically on top of each other, wherein each of the storage locations (24) is configured to receive at least one of the storage-lift trays (18);
a operating opening (26), which
is defined within the rack column (22), and
is configured to allow access from the outside to one of the storage-lift trays (18) located in the operating opening (26); and
a vertical conveyor (28) in the interior, which comprises a vertically movable lift load-handling device (30) configured to move the storage-lift trays (18), according to the goods-to-manipulator principle, horizontally into the operating opening (26);
**characterized in that** in each of the storage-lift trays (18) a plurality of vertically inclined conveying paths (32) are provided, which
extend parallel to each other along a depth of the respective storage-lift tray (18),
are arranged distributed over a length of the respective storage-lift tray (18), and
each comprise a stop element (34) at least at one of their ends (40, 42); and
wherein the vehicle load-handling device (16) is configured to receive the storage containers (20) from the storage-lift tray (18) located in the operating opening (26), and deliver the storage containers (20) to the storage lift tray (18) located in the operating opening (26).

2. The system (10) of claim 1, wherein the vehicle load-handling device (16) comprises a driven conveyor for pushing the storage containers (20) onto the storage-lift tray (18) located in the operating opening (26) and pulling the storage containers (20) from the storage-lift tray (18) located in the operating opening (26).

3. The system of claim 1 or 2, wherein the vehicle load-handling device (16) comprises one or more forks (50) arranged such that they are horizontally insertable into free spaces between the conveying paths (32), and in particular between the stop elements (34), in particular to subsequently lift the storage containers (20) in a meshing manner out of the storage-lift tray (18) located in the operating opening (26).

4. The system of any one of claims 1 to 3, wherein the vehicle load-handling device (16) is adjustable in height.

5. The system of any one of claims 1 to 4, wherein the stop elements (34) are switchable between a blockade position and a release position, in particular by a remotely arranged control or by the vehicle (14).

6. The system of any one of claims 1 to 5, wherein the conveying paths (32) are formed as single-track or multi-track.

7. The system (10) of any one of claims 1 to 6 further comprising a tilting mechanism (48) configured to tilt the storage-lift tray (18) located in the operating opening (26) from a horizontal position into a vertically inclined position towards the vehicle (14) such that the ends (42) of the conveying paths (32), which, in the horizontal position, are deeper than the other ends (40), are, in the vertically inclined position, higher than the other ends (40) of the conveying paths (32).

8. The system (10) of any one of claims 1 to 7, wherein the conveying paths (32) are formed passively, i.e. without their own drive.

9. The system (10) of any one of claims 1 to 8, wherein the conveying paths are implemented by freely rotating roller conveyors or by slide rails.

10. The system (10) of any one of claims 1 to 8, wherein the storage-lift trays (18) are trays, in particular extending over an entire length of the rack columns (16).

11. The system (10) of any one of claims 1 to 10, wherein the stop elements (34) are part of an edge (38) of the storage-lift tray (18), wherein the edge (38) in particular comprises recesses allowing meshing penetration of the vehicle load-handling device (16).

12. The system (10) of any one of claims 1 to 11, wherein the storage lift (12) comprises two rack columns (22-1, 22-2), each including a operating opening (26).

## Revendications

1. Système (10) comportant
un élévateur de stockage (12) et
au moins un véhicule (14) comportant un moyen de réception de charge de véhicule (16) ;
dans lequel l'élévateur de stockage (12) présente :
une pluralité de plateaux d'élévateur de stockage (18) qui sont respectivement conçus pour recevoir, conserver et distribuer un ou plusieurs conteneurs de stockage (20) ;
une colonne d'étagères (22) à l'intérieur de l'élévateur de stockage (12) qui définit une pluralité d'emplacements de stockage (24) fixes superposés verticalement, dans lequel chacun des emplacements de stockage (24) est conçu pour recevoir au moins l'un des plateaux d'élévateur de stockage (18) ;
une ouverture de manipulation (26) qui
est définie à l'intérieur de la colonne d'étagères (22), et
est conçue pour permettre un accès depuis l'extérieur à l'un des plateaux d'élévateur de stockage (18) qui se trouve dans l'ouverture de manipulation (26) ; et
un transporteur vertical (28) à l'intérieur qui présente un moyen de réception de charge d'élévateur (30) mobile verticalement et conçu pour stocker et déstocker les plateaux d'élévateur de stockage (18) horizontalement dans l'ouverture de manipulation (26) ainsi que dans les emplacements de stockage (24) selon le principe marchandise vers manipulateur ;
**caractérisé en ce que**
dans chacun des plateaux d'élévateur de stockage (18) sont prévues une pluralité de voies de transport (32) inclinées verticalement qui
s'étendent parallèlement les unes aux autres le long d'une profondeur du plateau d'élévateur de stockage (18) respectif,
sont réparties sur une longueur du plateau d'élévateur de stockage (18) respectif, et
présentent respectivement, au moins à l'une de leurs extrémités (40, 42), un élément d'arrêt (34) ; et
dans lequel le moyen de réception de charge de véhicule (16) est conçu pour recevoir les conteneurs de stockage (20) du plateau d'élévateur de stockage (18) se trouvant dans l'ouverture de manipulation (26) et pour distribuer les conteneurs de stockage (20) au plateau d'élévateur de stockage (18) se trouvant dans l'ouverture de manipulation (26).

2. Système (10) selon la revendication 1, dans lequel le moyen de réception de charge de véhicule (16) présente un transporteur entraîné pour pousser les conteneurs de stockage (20) sur le plateau d'élévateur de stockage (18) se trouvant dans l'ouverture de manipulation (26) et pour tirer les conteneurs de stockage (20) hors du plateau d'élévateur de stockage (18) se trouvant dans l'ouverture de manipulation (26).

3. Système selon la revendication 1 ou 2, dans lequel le moyen de réception de charge de véhicule (16) présente une ou plusieurs dents (50) qui sont disposées de telle sorte qu'elles peuvent être introduites horizontalement dans des espaces libres entre les voies de transport (32), et en particulier les éléments d'arrêt (34), en particulier pour soulever ensuite les conteneurs de stockage (20) verticalement par engrènement hors du plateau d'élévateur de stockage (18) se trouvant dans l'ouverture de manipulation (26).

4. Système selon l'une des revendications 1 à 3, dans lequel le moyen de réception de charge de véhicule (16) est réglable en hauteur.

5. Système selon l'une des revendications 1 à 4, dans lequel les éléments d'arrêt (34) peuvent être commutés entre une position de blocage et une position de déblocage, en particulier par une commande disposée à distance ou par le véhicule (14).

6. Système selon l'une des revendications 1 à 5, dans lequel les voies de transport (32) sont réalisées avec une voie ou plusieurs voies.

7. Système (10) selon l'une des revendications 1 à 6, présentant en outre un mécanisme de basculement (48) qui est conçu pour faire basculer le plateau d'élévateur de stockage (18) se trouvant dans l'ouverture de manipulation (26) d'une position horizontale à une position inclinée verticalement en direction du véhicule (14), de sorte que les extrémités (42) des voies de transport (32) qui sont plus basses que les autres extrémités (40) dans la position horizontale sont plus hautes que les autres extrémités (40) des voies de transport (32) dans la position inclinée verticalement.

8. Système (10) selon l'une des revendications 1 à 7, dans lequel les voies de transport (32) sont réalisées de manière à être passives, c'est-à-dire sans entraînement propre.

9. Système (10) selon l'une des revendications 1 à 8, dans lequel les voies de transport sont mises en œuvre par des convoyeurs à rouleaux à rotation libre ou par des glissières.

10. Système (10) selon l'une des revendications 1 à 8, dans lequel les plateaux d'élévateur de stockage (18) sont des plateaux qui s'étendent en particulier sur toute une longueur des colonnes d'étagères (16).

11. Système (10) selon l'une des revendications 1 à 10, dans lequel les éléments d'arrêt (34) font partie d'un bord (38) du plateau d'élévateur de stockage (18), dans lequel le bord (38) présente en particulier des évidements permettant une pénétration par engrènement du moyen de réception de charge de véhicule (16).

12. Système (10) selon l'une des revendications 1 à 11, dans lequel l'élévateur de stockage (12) présente deux colonnes d'étagères (22-1, 22-2) comportant respectivement une ouverture de manipulation (26).
